# EUROPÄISCHE PATENTSCHRIFT

(11) **EP 1 187 858 B1**
(45) Veröffentlichungstag und Bekanntmachung des Hinweises auf die Patenterteilung: **13.08.2003**
(21) Anmeldenummer: 00929482.8
(22) Anmeldetag: 03.05.2000
(51) Int. Cl.: C08F 210/02, C08F 2/00, C08L 77/00

(54) **VERFAHREN ZUR HERSTELLUNG VON ETHYLEN/(METH)ACRYLATCOPOLYMERISATEN MIT GERINGEM RESTCOMONOMERGEHALT**
PROCESS FOR PRODUCING ETHYLENE(METH)ACRYLATE COPOLYMERS WITH LOW RESIDUAL CONTENT IN COMONOMERS
PROCEDE DE PREPARATION DE COPOLYMERES ETHYLENE/(METH)ACRYLATE A FAIBLE TENEUR RESIDUELLE EN COMONOMERES

(30) Priorität: 17.05.1999 DE 19922104
(43) Veröffentlichungstag der Anmeldung: 20.03.2002
(73) Patentinhaber: BASF AKTIENGESELLSCHAFT, 67056 Ludwigshafen (DE)
(72) Erfinder: DECKERS, Andreas, D-55234 Flomborn (DE); WEBER, Wilhelm, D-67435 Neustadt (DE)
(86) Internationale Anmeldenummer: EP0003969
(87) Internationale Veröffentlichungsnummer: WO00069929

(56) Entgegenhaltungen:
- EP-A- 0 175 316
- EP-A- 0 694 583
- EP-A- 0 806 438
- DE-A- 4 419 518
- DE-A- 19 601 330

## Beschreibung

Vorliegende Erfindung betrifft ein Verfahren zur Herstellung von Copolymerisaten des Ethylens mit 1 bis 30 mol % Alkyl(Meth)acrylaten sowie optional weiteren Comonomeren und einem Restcomonomergehalt des Copolymerisats von weniger als 0,5 Gew. % in einer Kombination aus Rührautoklav und Rohrreaktor.

Copolymerisate des Ethylens mit (Meth)acrylaten und/oder (Meth)acrylsäure sind prinzipiell bekannt. So offenbaren beispielsweise DE-A 32 34 492, DE-A 32 38 391 und DE-A 34 34 380 derartige Copolymerisate unterschiedlicher Zusammensetzung und Eigenschaftsprofile. Sie finden insbesondere Verwendung als Zusatz zur Herstellung von leicht verarbeitbaren, schlagzähen Formmassen auf Basis Polyamid. Derartige Formmassen werden beispielsweise zur Herstellung von Zahnrädern oder elektrischen Schaltern mittels Spritzguss eingesetzt. Für eine derartige Anwendung von Ethylen/(Meth)acrylat-Copolymerisaten ist es wichtig, dass die Comonomere sehr homogen in das Copolymerisat eingebaut werden. Comonomerarme, also hauptsächlich aus Ethylen-Einheiten bestehende Anteile des Polymerisates wirken sich negativ auf die Eigenschaften der daraus hergestellten Polyamid-Formmassen aus. Unter anderem verringern sie deren Schlagzähigkeit.

Eine wichtige Anforderung an Ethylen/(Meth)acrylat-Copolymerisate ist ein möglichst geringer Restgehalt an Comonomeren. Handelsübliche Produkte enthalten mehr als 0,5 Gew. % an freien Comonomeren. Beim Erhitzen der Polyamid-Formmasse auf die für den Spritzguss üblichen Temperaturen von 250 bis 350°C verdampfen diese Comonomer-Anteile und gelangen in die Umgebungsluft. Dies führt zu Geruchsbelastung am Arbeitsplatz und ist auch arbeitsmedizinisch nicht unbedenklich.

Die vollständige Entfernung von Comonomeren aus dem Reaktionsprodukt ist jedoch nicht einfach. Die Herstellung von Ethylen/(Meth)acrylat-Copolymerisaten erfolgt üblicherweise durch Hochdruckpolymerisation in gerührten Autoklaven oder Rohrreaktoren (vgl. bspw. "Ethylene Polymers" in Encyclopedia of Polymer Science and Engineering, Vol. 6, Seite 404 ff.) oder einer Kombinationen von beidem, wie von EP-A 175 316 offenbart. Der Umsatz beträgt dabei je nach Reaktortyp bis zu 30% (Rührautoklav) oder bis zu 35% (Rohrreaktor). Obgleich (Meth)acrylat-Monomere reaktiver sind als Ethylen und demgemäß bei der Polymerisation bevorzugt in das Polymere eingebaut werden, verbleiben auch nicht umgesetzte Comonomere im Polymerisat. Während nicht umgesetzte Anteile von leicht flüchtigem Ethylen in den Produktabscheidesystemen unproblematisch entfernt werden können, werden nicht umgesetzte Anteile höhersiedender Comonomere, wie beispielsweise Butylacrylat, unter diesen Bedingungen nicht vollständig abgetrennt und verbleiben im Produkt. Sie lassen sich selbst bei einer Nachbehandlung mit einem Stripmedium wie bspw. N₂ nicht vollständig abtrennen. Keine der eingangs zitierten Schriften offenbart comonomerarme Ethylen/(Meth)acrylat-Copolymerisate oder Maßnahmen, mit denen sich der Restcomonomergehalt verringern läßt.

Aufgabe der vorliegenden Erfindung war es, Ethylen/(Meth)acrylat-Copolymerisate mit geringem Restcomonomergehalt sowie ein wirtschaftliches Verfahren zur Herstellung derartiger Polymerisate bereitzustellen.

Demgemäß wurde ein Verfahren zur Herstellung von Copolymerisaten des Ethylens mit 1 bis 30 mol % Alkyl(Meth)acrylaten sowie optional weiteren Comonomeren und einem Restcomonomergehalt des Copolymerisats von weniger als 0,5 Gew. % in einer Kombination aus Rührautoklav und nachgeschaltetem Rohrreaktor gefunden.

Die hergestellten Copolymerisate des Ethylens enthalten 1 bis 30 mol %, vorzugsweise 2 bis 20 mol% von Alkyl(Meth)acrylaten als Comonomere einpolymerisiert. Insbesondere geeignet als Alkyl(Meth)acrylate sind Ester der (Meth)acrylsäure mit linearen oder verzweigten C₁- bis C₈-Alkoholen. Beispiele geeigneter Ester sind Methyl(meth)acrylat, Butyl(meth)acrylat, (2-Ethylhexyl)(meth)acrylat oder t-Butyl(meth)acrylat. Ganz besonders geeignet ist Butylacrylat. Es können auch verschiedene Alkyl(meth)acrylate einpolymerisiert sein.

Die hergestellten Copolymerisate können darüber hinaus optional auch noch weitere Comonomere einpolymerisiert enthalten. Als weitere Comonomere kommen alle mit Ethylen copolymerisierbaren, insbesondere monoethylenisch ungesättigten Comonomere in Frage. Geeignet sind beispielsweise monoethylenisch ungesättigte Carbonsäuren und deren Derivate, insbesondere Acryl-, Methacryl-, Malein- und Fumarsäure, Amide, N-alkyl oder N.N'-Dialkylamide von ungesättigten Carbonsäuren wie bspw. (Meth)acrylsäureamid oder (Meth)acrylsäure(N,N'-dimethylamid), Mono- und Diester der Malein- bzw. Fumarsäure, Vinylcarbonsäureester, insbesondere Ester von C₁- bis C₆-Alkancarbonsäuren, wie bspw. Vinylacetat, N-Vinylformamid, N-Vinylpyrrolidon, monoethylenisch ungesättigte Alkohole, Ketone, Kohlenmonoxid, epoxidgruppenhaltige Monomere und cyclische Anhydride. Besonders bevorzugte weitere Comonomere sind Acrylsäure und Methacrylsäure.

Weitere Comonomere sind üblicherweise in einer Menge von 0 bis 10 mol%, bevorzugt 1 bis 5 mol% enthalten.

Die hergestellten Copolymerisate enthalten weniger als 0,5 Gew. % von nichtumgesetzten, d.h. nicht in das Copolymere eingebauten Comonomeren. Bevorzugt beträgt der Anteil nichtumgesetzter Comonomer weniger als 0,3 Gew. %.

Diese Copolymerisate werden nach dem erfindungsgemäßen Verfahren in einer Kombination aus einem Rührautoklaven mit einem nachgeschalteten Rohrreaktor hergestellt. Rührautoklaven sind Druckgefäße, die zur intensiven Durchmischung der Reaktionspartner mit einem Rührer versehen sind. Das Länge/Durchmesser-Verhältnis beträgt üblicherweise 1 bis 20. Rohrreaktoren bestehen aus üblicherweise schlangenförmig gebogenen, druckfesten Rohren die mit hohen Geschwindigkeiten durchströmt werden. Die Verbindung zwischen beiden Reaktoren kann bspw. durch eine einfache druckfeste Rohrverbindung hergestellt werden. Das Länge/Durchmesser-Verhältnis beträgt üblicherweise 5000 bis 50000. Die Copolymerisation des Ethylens mit (Meth)acrylaten und optional weiteren Comonomeren erfolgt bei Drücken von 350 bis 5000 bar, vorzugsweise bei 1500 bis 3000 bar.

Die Copolymerisation des Ethylens mit den (Meth)acrylaten und optional weiteren Comonomeren erfolgt in Gegenwart radikalischer Initiatoren. Hierbei kommen insbesondere diejenigen Initiatoren in Frage, die auch üblicherweise zur Homopolymerisation von Ethylen unter hohem Druck eingesetzt werden, wie beispielsweise Peroxide, Hydroperoxide oder Azo-Verbindungen. Beispiele für derartige Initiatoren sind Azo-iso-Buttersäuredinitril, t-Butylperpivalat, Di-t-butylperoxid, t-Butylhydroperoxid, t-Butylperbenzoat, t-Butylperisononanat, t-Butylperneodekanoat, Methyllisobutylketonperoxid oder Dilaurylperoxid. Es könne auch Gemische verschiedener Initiatoren verwendet werden.

Das Molekulargewicht der Copolymerisate kann in bekannter Weise durch Regler eingestellt werden. Geeignete Regler sind z.B. wasserstoff, Kohlenwasserstoffe wie Propan oder Propen oder Carbonylverbindungen wie Propionaldehyd, Aceton oder Methylethylketon.

Die Copolymerisation wird im allgemeinen lösungsmittelfrei durchgeführt. Dies schließt nicht aus, dass geringe Mengen von inerten Lösungsmitteln, die üblicherweise als Lösungsmittel für Initiatoren eingesetzt werden, anwesend sein können, bspw. Mineralöle.

Die Polymerisation erfolgt zweistufig. In der ersten Polymerisationsstufe wird im Rührautoklaven polymerisiert, in der 2. Stufe im Rohrreaktor. Die Polymerisationstemperatur wird vom Fachmann je nach den gewünschten Produkteigenschaften und den eingesetzten Comonomeren sowie gegebenenfalls eingesetzten weiteren Comonomeren gewählt. Entscheidend für das Verfahren ist aber, dass die Temperatur in der 2. Stufe höher ist als in der 1. Stufe. In der ersten Stufe wird die gewünschte Polymerisationstemperatur eingestellt und in der zweiten Stufe eine darüber liegende Temperatur. Für typische Monomerkombinationen wie bspw. Ethylen/Butylacrylat/Acrylsäure beträgt die Temperatur in der 1. Stufe bevorzugt weniger und in der 2. Stufe mehr als 200°C. Besonders bevorzugt beträgt die Temperatur in der 1 Stufe 180°C bis weniger als 200°C und in der zweiten Stufe mehr als 200°C bis 240°C. Die Verweildauern und Stoffströme in den Reaktoren werden dabei so eingestellt, dass die eigentliche Polymerisation in der Hauptsache im Rührautoklaven stattfindet und im Rohrreaktor nur noch Restbestandteile von (Meth)acrylat- und weiten Monomeren auspolymerisieren. Aufgrund der sehr homogenen Reaktionsbedingungen im Rührautoklaven werden somit sehr einheitliche Polymere erhalten. Im Regelfalle beträgt der Umsatz in der 1. Stufe mindestens 95 Gew.% (bezogen auf die Gesamtmasse des Endproduktes) und in der zweiten Stufe höchstens 5 Gew.%. Ist der Umsatz in der 2. Stufe größer, so können nachteiligerweise comonomerarme Ethylenpolymerisate entstehen. Bevorzugt beträgt der Umsatz in der 2. Stufe nur 0,1 bis 1 Gew.%. In der 2. Stufe reagieren insbesondere die vorhandenen Restanteile von Comonomeren ab. Es handelt sich somit um eine "chemische Desoderierung".

Das erfindungsgemäße Verfahren liefert Copolymerisate, die einen einen Restcomonomergehalt von weniger als 0,5 Gew. %, insbesondere von weniger als 0,3% aufweisen, und die dennoch über eine hohe Einheitlichkeit verfügen. Sie eignen sich daher in hervorragender Art und Weise als Zusatz zur Herstellung Polyamid-Formmassen mit hervorragender Schlagzähigkeit. Die Polyamid-Formmassen weisen bei der thermoplastischen Verarbeitung zu Formkörpern nur eine geringe Geruchsbelastung auf.

Die folgenden Beispiele sollen die Erfindung näher erläutern, ohne dass dadurch der Umfang der Erfindung eingeschränkt wird.

Der Restcomonomergehalt wurde jeweils mittels Head-Space-Chromatographie bestimmt.

### Beispiel 1

Der Versuch wurde in einer Kombination von Rührautoklav und Rohrreaktor durchgeführt. Es wurde ein 35 l-Stahlautoklav mit einem Länge/Durchmesser-Verhältnis von 15 eingesetzt, an den ein beheizbarer Rohreaktor von 400 m Länge über eine Rohrleitung angeschlossen war. Ein Strom von 1400 kg/h Ethylen wurde auf einen Druck von 2300 bar komprimiert. Dazu wurden mit einer Pumpe 57 l eines Gemisches aus 15 Gew.% Acrylsäure und 85 Gew. % Butylacrylat in die Saugseite des Nachverdichters dosiert und zusammen mit dem Ethylen auf Reaktionsdruck gebracht. Zusätzlich wurden zum Starten der Polymerisation in den Autoklaven mittels einer Höchstdruckpumpe 5,4 l/h einer Lösung von 0,3 mol/l t-Butylperpivalat in Isododecan gespritzt. Im Rührautoklaven stellte sich durch die freiwerdende Polymerisationswärme eine Reaktionstemperatur von 185°C ein. Anschließend strömt das Reaktionsgemisch in einen auf 210°C temperierten Rohrreaktor.

Nach dem Durchlaufen des Rohrreaktors wurde das Reaktionsgemsich zweistufug entspannt und mit Hilfe eines Extruders ausgetragen. Nichtumgesetztes Ethylen wurde in der Prozeß zurückgeführt. Es wurde ein Copolymerisat folgender Zusammensetzung erhalten:

| eingebaute Monomere | Ethylen | 88,1 mol% |
|---|---|---|
| | n-Butylacrylat | 9,0 mol% |
| | Acrylsäure | 2,9 mol% |
| | Restcomonomergehalt* | 0,3 Gew. % |

| | | |
|---|---|---|
| * Restgehalt an nicht einpolymeriserten Comonomeren bezogen auf das Produkt. | | |

### Beispiel 2

Es wurde wie in Beispiel 1 vorgegangen, nur wurde eine Apparatur ohne nachgeschalteten Rohrreaktor eingesetzt.

Es wurde ein Copolymerisat folgender Zusammensetzung erhalten:

| eingebaute Monomere | Ethylen n-Butylacrylat | 88,0 mol% 9,1 mol% |
|---|---|---|
| | Acrylsäure | 2,9 mol% |
| | Restcomonomergehalt | 0,55 Gew. % |

### Beispiel 3

Der Versuch wurde in einem Rührreaktor wie in DE-A 34 34 380 Beispiel 1 beschrieben durchgeführt.

Es wurde ein Copolymerisat folgender Zusammensetzung erhalten:

| eingebaute Monomere | Ethylen | 87,6 mol% |
|---|---|---|
| | n-Butylacrylat | 9,5 mol% |
| | Acrylsäure | 2,9 mol% |
| | Restcomonomergehalt | 0,5 Gew. % |

## Patentansprüche

1. Verfahren zur Herstellung von Copolymerisaten des Ethylens mit 1 bis 30 mol % (Meth)acrylaten sowie optional weiteren Comonomeren und einem Restcomonomergehalt des Copolymerisates von weniger als 0,5 Gew. %, indem man die Polymerisation in einer Kombination aus Rührautoklav und nachgeschaltetem Rohrreaktor durchführt,
**dadurch gekennzeichnet, dass** man
- die Monomerenmischung zunächst in einer 1. Stufe in einem Rührautoklaven polymerisiert, und
- anschließend in einer zweiten Stufe in einem Rohrreaktor bei höheren Temperaturen als in der 1. Stufe weiterpolymerisiert.

2. Verfahren gemäß Anspruch 1, **dadurch gekennzeichnet, dass** die Temperatur in der 1. Stufe weniger als 200°C und in der 2. Stufe mehr als 200°C beträgt.

3. Verfahren gemäß Anspruch 2, **dadurch gekennzeichnet, dass** die Temperatur in der 1. Stufe 180 bis weniger als 200°C und in der zweiten Stufe mehr als 200 bis 240°C beträgt.

## Claims

1. A process for preparing copolymers of ethylene with from 1 to 30 mol% of (meth)acrylates and, if desired, with other comonomers, and a residual comonomer content of less than 0.5% by weight in the copolymer by carrying out the polymerization in a combination of stirred autoclave and downstream tubular reactor, **characterized in that** it comprises
- first polymerizing the monomer mixture in a stirred autoclave in a first stage, and
- then, in a second stage, continuing the polymerization in a tubular reactor at temperatures higher than in the first stage.

2. A process as claimed in claim 1, **characterized in that** the temperature is less than 200°C in the first stage and more than 200°C in the second stage.

3. A process as claimed in claim 2, **characterized in that** the temperature is from 180 to less than 200°C in the first stage and from more than 200 to less than 240°C in the second stage.

## Revendications

1. Procédé de préparation de copolymères d'éthylène comportant de 1 à 30% molaires de (méth)acrylates, ainsi qu'éventuellement d'autres comonomères, et présentant une teneur résiduelle en comonomères dans le copolymère de moins de 0,5% en poids, dans lequel la polymérisation est entreprise dans une combinaison d'autoclave à brassage et de réacteur tubulaire en aval, **caractérisé en ce que**
- le mélange de monomères est d'abord polymérisé, dans une 1^{ère} étape, dans un autoclave à brassage, et
- l'on poursuit la polymérisation, en une deuxième étape, dans un réacteur tubulaire à une température supérieure à celle de la 1^{ère} étape.

2. Procédé selon la revendication 1, **caractérisé en ce que** la température dans la 1^{ère} étape est inférieure à 200°C et , dans la deuxième étape, est supérieure à 200°C.

3. Procédé selon la revendication 2, **caractérisé en ce que** la température dans la 1^{ère} étape est de 180 à moins de 200°C et, dans la deuxième étape, de plus de 200°C à 240°C.
